(19) Europäisches Patentamt
European Patent Office
Office européen des brevets

(11) **EP 3 497 619 B1**

(12) **EUROPEAN PATENT SPECIFICATION**

(45) Date of publication and mention
of the grant of the patent:
**13.10.2021 Bulletin 2021/41**

(51) Int Cl.:
***G06K 9/00*** *(2006.01)*          *G06K 9/62* *(2006.01)*

(21) Application number: **17757468.8**

(22) Date of filing: **03.08.2017**

(86) International application number:
**PCT/EP2017/069611**

(87) International publication number:
**WO 2018/029066 (15.02.2018 Gazette 2018/07)**

(54) **METHOD FOR DETECTING A LED LIGHT SOURCE IN A SEQUENCE OF FRAMES, METHOD FOR DETECTING A TRAFFIC LIGHT WHICH COMPRISES AT LEAST ONE LED LIGHT SOURCE, AND VEHICLE**

VERFAHREN ZUR ERKENNUNG EINER LED-LICHTQUELLE IN EINER FRAMESEQUENZ, VERFAHREN ZUR ERKENNUNG EINER VERKEHRSAMPEL MIT MINDESTENS EINER LED-LICHTQUELLE UND FAHRZEUG

PROCÉDÉ DE DÉTECTION D'UNE SOURCE DE LUMIÈRE À DIODES ÉLECTROLUMINESCENTES (DEL) DANS UNE SÉQUENCE DE TRAMES, PROCÉDÉ DE DÉTECTION D'UN FEU DE CIRCULATION COMPRENANT AU MOINS UNE SOURCE DE LUMIÈRE DEL, ET VÉHICULE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.08.2016 DE 102016214664**

(43) Date of publication of application:
**19.06.2019 Bulletin 2019/25**

(73) Proprietor: **Bayerische Motoren Werke Aktiengesellschaft**
**80809 München (DE)**

(72) Inventors:
• **HOFMANN, Marc**
**80797 München (DE)**
• **SAKAI, Miho**
**Chiyoda-ku**
**Tokyo 100-6622 (JP)**
• **WU, ZhiPeng**
**Tokyo 113-8654 (JP)**
• **WATANABE, Yoshihiro**
**Tokyo 113-8654 (JP)**
• **ISHIKAWA, Masatoshi**
**Tokyo 113-8654 (JP)**

• H. Premachandra ET AL: "LED Traffic Light Detection Using High-speed-camera Image Processing for Visible Light Communication", Information and Media Technologies, 1 January 2011 (2011-01-01), pages 785-791, XP55410838, DOI: 10.11185/imt.6.785 Retrieved from the Internet: URL:https://www.jstage.jst.go.jp/article/imt/6/3/6_3_785/_pdf
• Adín Ramírez Rivera ET AL: "Local Directional Texture Pattern Image Descriptor", , 1 January 2015 (2015-01-01), XP55410790, Retrieved from the Internet: URL:http://www.ic.unicamp.br/~adin/downloads/pubs/RamirezRivera2015.pdf [retrieved on 2017-09-27]
• WADA M ET AL: "Road-to-vehicle communication using LED traffic light", INTELLIGENT VEHICLES SYMPOSIUM, 2005, 6 June 2005 (2005-06-06), - 8 June 2005 (2005-06-08), pages 601-606, XP010833861, IEEE, PISCATAWAY, NJ, USA DOI: 10.1109/IVS.2005.1505169 ISBN: 978-0-7803-8961-8

(56) References cited:
**WO-A1-2015/136601     JP-A- 2005 301 518**

- ZHANG YUE ET AL: "A multi-feature fusion based traffic light recognition algorithm for intelligent vehicles", PROCEEDINGS OF THE 33RD CHINESE CONTROL CONFERENCE,, 28 July 2014 (2014-07-28), pages 4924-4929, XP032641526, IEEE, Piscataway, NJ, USA DOI: 10.1109/CHICC.2014.6895775 [retrieved on 2014-09-11]
- Ronan O'malley ET AL: "Vehicle Detection at Night Based on Tail-Light Detection", International Symposium on Vehicular Computing Systems, Trinity College Dublin, 1 July 2008 (2008-07-01), XP55036740, Retrieved from the Internet: URL:http://www.eee.nuigalway.ie/Research/car/documents/romalley_isvcs08.pdf [retrieved on 2012-08-29]
- XIAOYANG TAN ET AL: "Enhanced Local Texture Feature Sets for Face Recognition Under Difficult Lighting Conditions", IEEE TRANSACTIONS ON IMAGE PROCESSING,, vol. 19, no. 6, 1 June 2010 (2010-06-01), pages 1635-1650, XP011328557, IEEE SERVICE CENTER, PISCATAWAY, NJ, US ISSN: 1057-7149, DOI: 10.1109/TIP.2010.2042645
- WU ZHIPENG ET AL: "Hybrid LED traffic light detection using high-speed camera", 2016 IEEE 19TH INTERNATIONAL CONFERENCE ON INTELLIGENT TRANSPORTATION SYSTEMS (ITSC), IEEE, 1 November 2016 (2016-11-01), pages 1235-1241, XP033028498, DOI: 10.1109/ITSC.2016.7795715 [retrieved on 2016-12-22]

**Description**

**Field**

The field of the invention relates to detecting a Light-Emitting Diode (LED) in a frame sequence. In particular, the invention relates to a method for detecting a LED light source in a sequence of frames, a method for detecting a traffic light which comprises at least one LED light source, and a vehicle comprising a processing unit configured to detect a LED light source or a traffic light comprising at least one LED light source.

**Background**

Automatic Traffic Light Detection (TLD) plays an important role for driver-assistance systems and autonomous vehicles. In conventional TLD systems, a camera is mounted in a vehicle and the data of the camera is interpreted via a computer vision approach. An overview on conventional TLD systems is, e.g., given in M. Jensen et al. "Vision for Looking at Traffic Lights: Issues, Survey, and Perspectives" in IEEE Transactions on Intelligent Transportation Systems Vol. 17, Issue 7. For example, model-based approaches rely on heuristically determined models using shape, color and intensity. Learning-based approaches find the solution in a machine learning way using the collection of positive and negative samples and training algorithms (e.g. SVM or AdaBoost). Further, Global Positioning System (GPS) localization may be used as auxiliary data. That is, conventional TLD systems rely on visual information from static frames, and optionally localization data. However, traffic lights from different countries, regions, and manufactures are visually distinct. The, hence, resulting large intra-class variance may allow good performance for the pre-trained detectors on a specific dataset, but cause failure on other datasets. Conventional algorithms extract deliberate visual features (e.g. color, shape, position) and rule them on the basis of trained images. However, under complex circumstances of real life traffic (e.g. distinguishing a red traffic light from vehicle tail lights), decisions relying on visual features suffer from a low detection recall and a high number of false alarms.

Further, document H. Premachandra et al. "LED Traffic Light Detection Using High-speed camera Image Processing for Visible Light Communication" in Information and Media Technologies, 6 (3), pages 785 - 791, January 2011 proposes to turn traffic light signs ON and OFF at a frequency of 500 Hz such that the ON/OFF switching of the traffic light signs can be detected in a series of high-speed camera images.

Document WO 2015/136601 A1 proposes to extract a pixel from a series of images which varies in synchronization with an alternating current cycle of electric power supplied to a traffic light in order to detect the traffic light.

In document Ramirez Rivera et al. "Local Directional Texture Pattern Image Descriptor" in Pattern Recognition Lettters, January 2015, a new feature descriptor named Local Directional Texture Pattern, which is a mixture of structural and contrast information, is proposed for automatic image recognition.

Hence, there may be a desire for an improved detection of light sources.

**Summary**

The scope of the invention is defined by the subject-matter of the appended claims.

The invention relates to a method for detecting a LED light source in a sequence of frames of an environment. The sequence of frames comprises at least 5 frames. The method comprises selecting a frame portion of interest and determining, using the sequence of frames, a variation of the frame portion of interest. Determining the variation of the frame portion of interest comprises comparing a characteristic value of the frame portion of interest in one frame of the sequence of frames to the respective characteristic values of the frame portion of interest in temporally preceding frames of the sequence of, wherein the result of each comparison is represented by characters 0, 1 or 2 according to the expression

$$T(i,j) = \begin{cases} 0 & if \ i < j - t \\ 1 & if \ |i - j| \le t \\ 2 & if \ i > j + t \end{cases},$$

with T($i$,$j$) denoting a respective comparison result, $i$ denoting the characteristic value of the frame portion of interest in the one frame of the sequence of frames, $j$ denoting the characteristic value of the frame portion of interest in a respective one of the temporally preceding frames of the sequence of frames, and $t$ denoting a constant. The method further comprises generating a pattern from the respective comparison results of comparing the characteristic value of the frame portion of interest in the one of the sequence of frames to the respective characteristic values of the frame portion of interest in the temporally preceding frames of the sequence of frames. The pattern is generated by concatenating together the respective comparison results into a string such that the leftmost character of the pattern results from the comparison of the characteristic value of the frame portion of interest in the one frame, $p_i$, of the sequence of frames with the characteristic value of the frame portion of interest in the temporally preceding frame $p_{i-n}$, the second character from the left of the pattern results from the comparison of the characteristic values $p_i$ and $p_{i-(n-1)}$ and so on, wherein $n+1$ is the number of frames in the sequence of frames. In addition, the method comprises comparing the pattern to a reference pattern. The reference pattern indicates the presence of an LED light source. The method comprises determining that the frame portion of interest is a candidate for representing the LED light source, if the pattern is equal to the reference pattern. A frame rate of the sequence of frames is 100 frames per second or more. The characteristic value represents a luminance or brightness of the frame portion The proposed method may allow to the detect LED light sources with high detection accuracy using the circumstance that LED light sources flash at a certain frequency. The proposed method may allow to the detect LED light sources with high detection accuracy using the circumstance that LED light sources flash at a certain frequency.

The invention also relates to a method for detecting a traffic light which comprises at least one LED light source in a sequence of frames of an environment, wherein the method comprises the above method for detecting a LED light source in a sequence of frames of an environment. The method may allow to detect LED light source based traffic lights with high detection accuracy. For example, a confusion between a traffic light and vehicle tail lights may be omitted. Accordingly, a performance and accuracy of driver-assistance systems or autonomous vehicles may be improved.

A further aspect of the invention relates to a vehicle comprising a processing unit configured to perform one of the above methods. By executing one of the above methods, a performance and accuracy of a driver-assistance system provided by the vehicle, or autonomous driving by the vehicle may be improved.

Yet another aspect of the invention relates to a machine readable storage medium having stored thereon a program having a program code for performing one of the above methods, when the program is executed on a computing unit or a processor. The machine readable storage medium allows to execute one of the above methods on a computing unit or a processor of a device relying on LED light source detection or traffic light detection. Moreover, the machine readable storage medium may allow to update existing programs, algorithms or configurations to the proposed methods.

## Brief description of the Figures

Some embodiments of apparatuses and/or methods will be described in the following by way of example only, and with reference to the accompanying figures, in which

Fig. 1 illustrates a flowchart of an example of a method for detecting a LED light source in a sequence of frames of an environment;
Fig. 2 illustrates an example of a traffic scene;
Fig. 3a illustrates an example of a temporal course of an average luminance in a frame portion of interest;
Fig. 3b illustrates an example of a frequency spectrum for the temporal course illustrated in Fig. 3a;
Fig. 4a illustrates another example of a traffic scene;
Fig. 4b illustrates an example of a motion mask filtered version of the traffic scene illustrated in Fig. 4a;
Fig. 4c illustrates an example of a color mask filtered version of the motion mask filtered version illustrated in Fig. 4b;
Fig. 4d illustrates an example of a temporal contrast mask filtered version of the doubly filtered version illustrated in Fig. 4c;
Fig. 5 illustrates an example of a comparison of characteristic values of a sequence of frames;
Figs. 6a to 6c illustrate a frame in various phases of the proposed method; and
Fig. 7 illustrates an example of a vehicle.

## Detailed Description

Various examples will now be described more fully with reference to the accompanying drawings in which some examples are illustrated. In the figures, the thicknesses of lines, layers and/or regions may be exaggerated for clarity.

Accordingly, while further examples are capable of various modifications and alternative forms, some particular examples thereof are shown in the figures and will subsequently be described in detail. Like numbers refer to like or similar elements throughout the description of the figures, which may be implemented identically or in modified form when compared to one another while providing for the same or a similar functionality.

It will be understood that when an element is referred to as being "connected" or "coupled" to another element, the elements may be directly connected or coupled or via one or more intervening elements. In contrast, when an element is referred to as being "directly connected" or "directly coupled" to another element, there are no intervening elements present. Other words used to describe the relationship between elements should be interpreted in a like fashion (e.g.,

"between" versus "directly between," "adjacent" versus "directly adjacent", to name just a few examples).

The terminology used herein is for the purpose of describing particular examples is not intended to be limiting for further examples. Whenever a singular form such as "a," "an" and "the" is used and using only a single element is neither explicitly or implicitly defined as being mandatory, further examples may also use plural elements to implement the same functionality. Likewise, when a functionality is subsequently described as being implemented using multiple elements, further examples may implement the same functionality using a single element or processing entity. It will be further understood that the terms "comprises," "comprising," "includes" and/or "including," when used, specify the presence of the stated features, integers, steps, operations, processes, acts, elements and/or components, but do not preclude the presence or addition of one or more other features, integers, steps, operations, processes, acts, elements, components and/or any group thereof.

Unless otherwise defined, all terms (including technical and scientific terms) are used herein in their ordinary meaning of the art to which the examples belong, unless expressly defined otherwise herein.

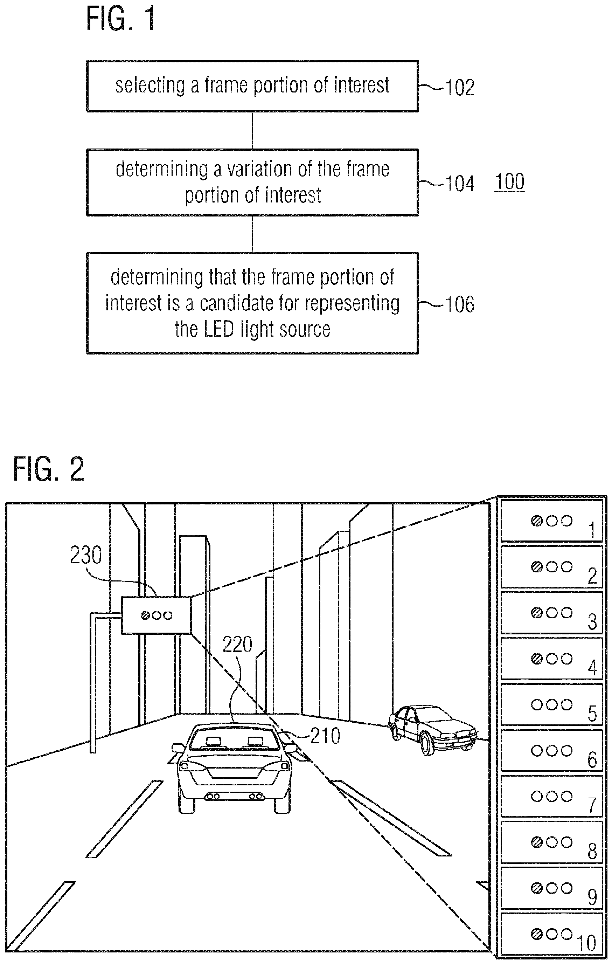

Fig. 1 illustrates a method 100 for detecting a LED light source in a sequence of frames of an environment. A LED light source is a light source which comprises at least one LED. That is, a LED light source is a light source which emits light to the environment that is radiated by the at least one LED. The LED may radiate light of any color. For example, the LED may radiate green light, blue light, red light, or any combination thereof.

The sequence of frames of the environment is a plurality of frames of a same environment scenery (e.g. a traffic scene). The individual frames of the plurality of frames may, e.g., be in chronological order. For example, the sequence of frames of the environment may be generated by a sensor which is sensitive to photons. The sensor may, e.g., be camera or a high-speed camera. Each frame comprises a plurality of pixels determined by the resolution of the individual frames of the sequence of frames.

The method 100 comprises selecting 102 a frame portion of interest. The frame portion of interest may be selected using one or more frames of the sequence of frames on the basis of one or more selection (filter) criteria. The frame portion of interest may be any portion of a frame of the sequence of frames. For example, the frame portion of interest may comprise one pixel, two pixels, five pixels, ten pixels, one hundred pixels, one thousand pixels, ten thousand pixels, or more. The one or more selection criteria may be applied to a single frame of the sequence of frames and/or to two or more frames of the sequence of frames.

Further, the method 100 comprises determining 104 a variation of the frame portion of interest using the sequence of frames. That is, a variation of a frame portion of interest's characteristic within the sequence of frames is determined. For determining the variation of the frame portion of interest, two or more frames of the sequence of frames may, e.g., be partially compared to each other.

A LED comprises p-n junction which radiates light when a suitable forward voltage is applied to input terminals of the LED. Power grids provide Alternating Current (AC). However, a LED requires Direct Current (DC) at a defined voltage level for operation. Hence, an AC input signal supplied by the power grid is converted to a DC signal having a defined voltage level (e.g. 12 Volts) using, e.g., full-wave rectification. Full-wave rectification converts the AC waveform with alternating polarity to a pulsating DC waveform with constant polarity. Power grids provide the AC signal with a defined frequency. Due to rectification, the frequency of the DC signal is a multiple of the AC signal's frequency. In other words, the frequency of an occurrence of extrema of one polarity in the rectified DC signal is a multiple of an occurrence of extrema of the one polarity in the AC signal. The waviness of the rectified DC signal (i.e. the ripples in the rectified DC signal) translates into a flashing of the LED at the frequency of the rectified DC signal. Hence, a flashing characteristic of the LED light source may be known from the frequency of the AC signal supplied by the power grid and the rectification method. Accordingly, knowledge on the frequency of the LED light source flashing may be used to detect the LED light source in the sequence of frames. This is based on the assumption that the flashing characteristic of the LED light source corresponds to a specific temporal variation of the frame portion of interest.

Hence, the method 100 further comprises determining 106 that the frame portion of interest is a candidate for representing the LED light source, if a frequency of the variation is within a predefined frequency range. If the frequency of the variation is within the predefined frequency range, it is assumed that the variation corresponds to the flashing of the LED light source. Hence, the frame portion of interest is classified as candidate for representing the LED light source.

In some examples, the frame portion of interest may be a (single) pixel. Analyzing a single pixel in order to determine whether or not it is a candidate for representing the LED light source may be a beneficial granularity for analysis since a sensor usually provides frame data on a pixel basis.

The sequence of frames comprises at least five frames. Five frames may be sufficient to detect a variation of the frame portion of interest that is characteristic for LED flashing. However, also more frames may be used. For example, 10 frames, 15 frames, 20 frames, 25 frames, 30 frames, 35 frames, 40 frames, 45 frames, 50 frames, or more may be used.

A frame rate of the sequence of frames is 100 Frames Per Second (FPS) or more. That is, a time lag between consecutive frames of the sequence of frames is 0.01 seconds or less. The small time lag may allow to assume that a relative position of an object within the frame does not change significantly during the time period covered by the sequence of frames. Accordingly, analysis may be facilitated. For example, the frame rate may be 100 FPS, 150 FPS, 200 FPS, 250 FPS, 300 FPS, 350 FPS, 400 FPS, 450 FPS, 500 FPS, 550 FPS, 600 FPS, 650 FPS, 700 FPS, 750 FPS, 800 FPS, 850 FPS, 900 FPS, 950 FPS, 1000 FPS, or more.

The predefined frequency range may, e.g., be between 95 Hz and 105 Hz, or between 115 Hz and 125 Hz. Throughout the world, power grids provide AC signals either at 50 Hz or at 60 Hz. If a conventional full-wave rectifier is used for rectifying the AC signal to a DC signal for the LED light source, the frequency of the rectified DC signal is double the frequency of the AC signal as provided by the power grid. Accordingly, the LED light source flashes either at 100 Hz or at 120 Hz. Hence, using the proposed frequency ranges, candidates for representing an LED light source are determined under the assumption that the frequency of the variation of the frame portion of interest corresponds to the flashing frequency of the LED light source.

In the following, further aspects of the proposed method are discussed in connection with TLD. However, the proposed method is not limited to this field. In general, the proposed method may be used to detect any kind of LED light source in a sequence of frames.

Fig. 2 illustrates a traffic scene 200. The traffic scene 200 is recorded at a frame rate of 1000 FPS by a high-speed camera mounted in a vehicle. Various light sources are present in traffic scene 200. For example, the tail lights 210 of the vehicle 220 in front, and the traffic light 230.

On the right side of Fig. 2, a detailed view of the traffic light 230 during ten consecutive frames recorded by the high-speed camera is illustrated. The traffic light comprises a plurality of LED light sources. During the ten consecutive frames, the traffic light 230 was set to green light. It is evident from the ten consecutive frames that there are frames in which the LED light sources are totally lighted on and frames in which the LED light sources are lighted off. In other words, the LED light sources of the traffic light are flashing at a certain frequency. The LED light sources of the traffic light are flashing (blinking) at a high frequency (e.g. 100 Hz or 120 Hz, see above) which is unnoticeable to the naked eye but which may be detected by sensors providing an adequate recording frame rate (e.g. high speed cameras). As discussed above, a frame rate of 100 FPS or more may be used.

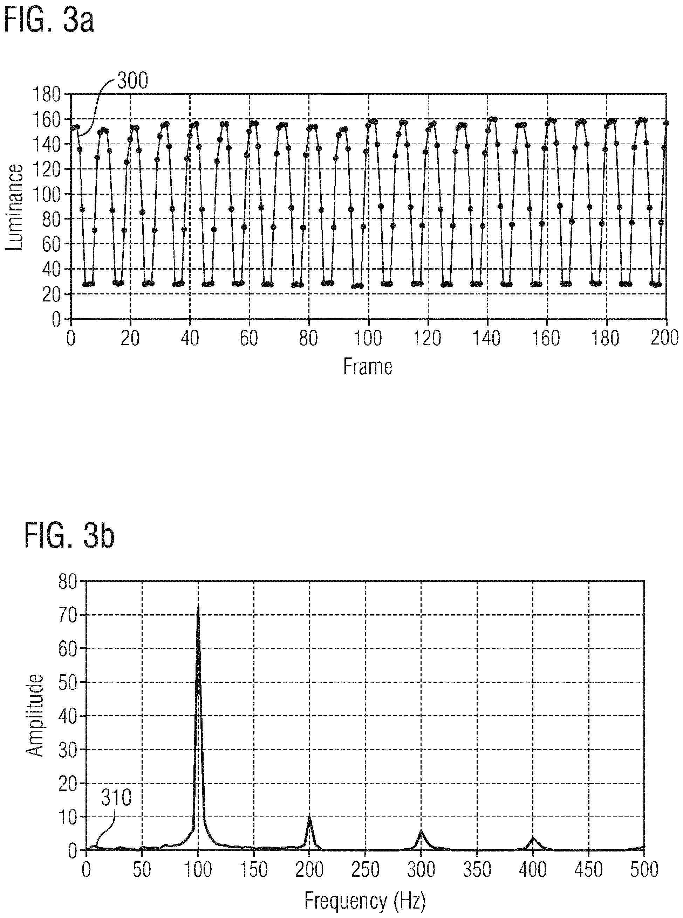

That is, a portion of the frame depicting the green light radiated by the LED light sources of the traffic light may, e.g., be determined (selected) as frame portion of interest in the proposed method. For example, the frame portion of interest may be a pixel depicting the green light radiated by the LED light sources. In Fig. 3a, an example of a temporal course of an average luminance in the determined frame portion of interest is illustrated. Fig. 3a illustrates the average luminance intensities (in arbitrary units) of the frame portion of interest for each frame in a sequence of 200 frames. The blue dot markers represent the luminance values of the frame portion of interest in the individual frames. The blue dot markers are connected by a solid line. The resulting curve 300 shows a sine-like periodic pattern.

The frequency spectrum 310 of the curve 300 illustrated in Fig. 3a is illustrated in Fig. 3b. It is evident from Fig. 3b that a high peak resides at approximately 100 Hz. That is, the LED light sources of the traffic light illustrated in Fig. 2 flash (blink) at a frequency of approximately 100 Hz. As discussed above, the flashing frequency is related to the frequency of the AC signal provided by the power grid to the traffic light.

Unlike visual appearances, which may vary greatly by regions, manufactures, or even illumination changes, the frequency of the electricity as provided by power grids around the world is unified to either 50Hz (e.g. in Europe or Australia) or 60Hz (e.g. in North America). Hence, the flashing pattern of the LED light sources may be a robust feature for TLD.

As discussed above, sensors (high-speed vision systems) having the ability to record (capture) hundreds or thousands of frames within one second may be used to provide the sequence of frames. Along with this very high temporal resolution, the amount of frames (i.e. data) requires efficient and fast data processing. Moreover, since vehicles are moving, a depicted background of the traffic light in the sequence of frames may change. However, due to the high temporal resolution within the sequence of frames (i.e. the high frame rate of, e.g., 100 FPS or more), object displacements in consecutive (adjacent) frames may be (far) less than a sub-pixel - even when the vehicle (i.e. the sensor) is moving at high speed. Therefore, sequence of frames may be limited to a short window (e.g. 10 frames at a frame rate of 1000 FPS), and it may be assumed that most objects depicted in the sequence of frames do not move significantly within the sequence of frames.

For the analysis of the sequence of frames further influences such as lighting (e.g. day, night), exposure, white balance, and defocus blur may be considered. Hence, selecting the frame portion of interest may comprise repeatedly filtering at least part of the sequence of frames using a plurality of filter criteria. The filtering may be understood as pre-processing to filter out non-interesting frame portions in order to speed up the data processing. For example, the one or more filter criteria may be applied to a single frame of the sequence of frames and/or to two or more frames of the sequence of frames. Heuristic features (e.g. color, motion, or contrast) may, e.g., be used as filter criteria.

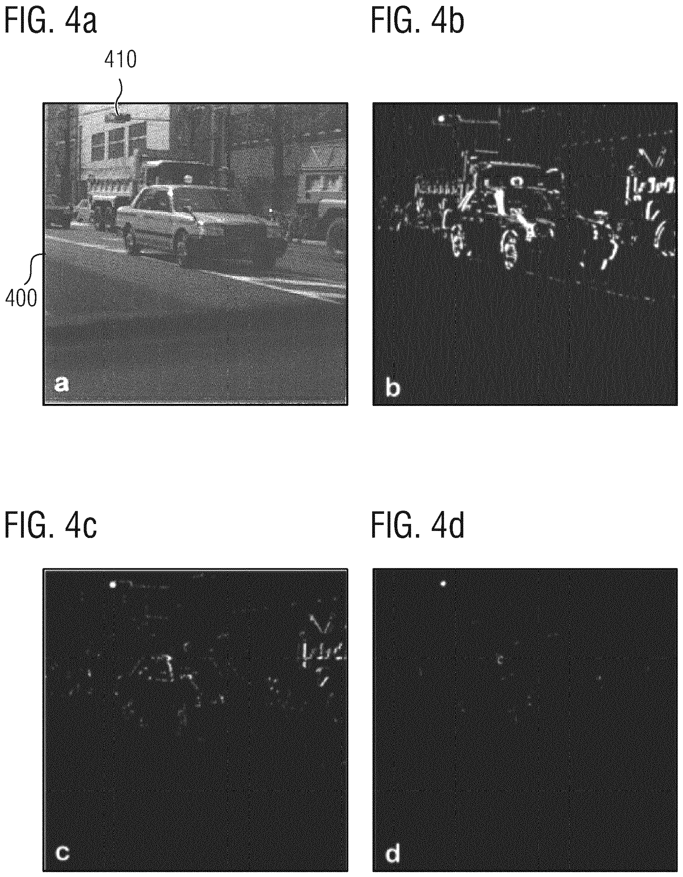

An exemplary filtering sequence is discussed in the following with respect to Figs. 4a to 4d. However, it is to be noted that the discussed filtering processes are merely illustrative and that other filter criteria, less filter criteria, more filter criteria, or a different order of the filter criteria may be used.

Fig. 4a illustrates another traffic scene 400 which comprises a traffic light 410. Again, the traffic light 410 comprises at least one LED light source.

In order to distinguish static frame portions from flashing (blinking) frame portions, repeatedly filtering at least part of the sequence of frames using a plurality of filter criteria may comprise determining a first set of frame portions, wherein for each frame portion in the first set of frame portions the summed differences in the pixel value between the frame portion in one of the sequence of frames and the frame portion in the other ones of the sequence of frames is above a threshold. That is, a frame portion in one frame of the sequence of frames is compared to the corresponding frame portion in all the other frames of the sequence of frames, respectively.

The pixel value indicates the intensity of the photons striking a certain frame portion. That is, each frame portion stores a value proportional to the light intensity at that particular location of the frame. For example, if the frame portion is a single pixel, the pixel value indicates the light intensity (brightness) at that particular pixel in the frame. For example, if the frame portion comprises a plurality of pixels (i.e. two or more), the pixel value indicates the light intensity at that plurality of pixels in the frame. For example, the pixel value of the frame portion may be the summed pixel values for the individual pixels of the plurality of pixels, or an average value of the pixel values for the individual pixels of the plurality of pixels.

For a binary frame, the pixel value may be a 1-bit number indicating either foreground or background. For a grayscale frame, the pixel value may be a figure that represents the brightness of the pixel. The pixel value may be used to decode a frame by storing the pixel value for the individual pixels as, e.g., an 8-bit integer giving a range of possible values from 0 to 255. For example, zero may indicate black and 255 may indicate white. Values in between may, hence, indicate the different shades of gray. To represent colored frames, separate red, green and blue components may be specified for each pixel (assuming an RGB color space). Hence, the pixel value is actually a vector of three numbers. The three different components may, e.g., be stored as three separate "grayscale" frames, which are also known as color planes (one for each of red, green and blue). The three separate "grayscale" frames may be recombined for displaying or processing the frame.

For a sequence of $n$ frames, the comparison between the frame portions may, e.g., be based on an expression which is mathematically correspondent to

$$M_m = \sum_{k=1}^{n} |f_{i-k} - f_i| > TH_m \qquad (1),$$

where $M_m$ denotes the summed differences in the pixel value, $f_i$ denotes the pixel value of the frame portion in the one selected frame of the $n$ frames, $f_{i-k}$ denotes the pixel value of the frame portion in one of the other frames of the sequence of $n$ frames, and $TH_m$ denotes the threshold.

That is, a motion mask $M_m$ is used for eliminating static frame portions (e.g. pixels) and keeping only moving and flashing (blinking) ones. It may be extracted by aggregating the frame differences and comparing it to the threshold $TH_m$.

Hence, the first set of frame portions comprises merely frame portions which are not static. By adjusting the value of the threshold $TH_m$, a required minimum variation within a frame portion may be adjusted.

The motion mask filtered version of the traffic scene illustrated in Fig. 4a is illustrated in **Fig. 4b.** In Fig. 4b the non-static frame portions (e.g. pixels) are depicted in white, whereas the static frame portions are depicted in black. That is, the frame portions comprised by the first set of frame portions are depicted in white.

Further, in order to filter out frame portions of wrong color, repeatedly filtering at least part of the sequence of frames using a plurality of filter criteria may further comprise determining a second set of frame portions from the first set of frame portions, wherein the frame portions in the second set of frame portions exhibit a predetermined color range. That is, the frame portions of the first set of frame portions are compared to the predetermined color range. The predetermined color range may, e.g., comprise one or more colors and corresponding nuances of the colors. For example, the predetermined color range may comprise different nuances of red and/or yellow and/or green. The predetermined color range may be selected based on the kind of LED light sources that is to be detected. In some examples, a normalized RGB color space may be used to deal with changing scene conditions such as lighting, exposure, or white balance.

That is, a color mask is used for eliminating frame portions of wrong color and keeping only frame portions of a predetermined (interesting) color range. Hence, the second set of frame portions comprises merely frame portions which exhibit a certain color range.

The further color mask filtered version of the motion mask filtered version of the traffic scene as illustrated in Fig. 4b is illustrated in **Fig. 4c.** In Fig. 4c the non-static frame portions (e.g. pixels) exhibiting the predetermined color range are depicted in white, whereas the frame portions which are static and/or of wrong color are depicted in black. That is, the frame portions comprised by the second set of frame portions are depicted in white.

Frame portions representing a LED light source change between dark and bright within one flashing period (see e.g. Fig. 2). Accordingly, a temporal contrast of the frame portions within the sequence of frames may be used to filter out further non-interesting frame portions. Hence, repeatedly filtering the sequence of frames using a plurality of filter criteria may further comprise selecting a frame portion of the second set of frame portions as the frame portion of interest, wherein for the frame portion of interest a difference in the pixel value between the frame portion of interest exhibiting the highest pixel value among the sequence of frames and the frame portion of interest exhibiting the lowest pixel value among the sequence of frames is above a threshold.

That is, a frame portion of the second set of frame portions is merely selected as frame portions of interest, if a maximum contrast for this frame portion within the sequence of frames is above a threshold.

For a sequence of $n$ frames, the comparison between the frame portions may, e.g., be based on an expression which is mathematically correspondent to

$$M_t = \max_{k=1\ldots n} \{f_{i-k}\} - \min_{k=1\ldots n} \{f_{i-k}\} > TH_t \quad (2),$$

where $M_t$ denotes the difference in the pixel value, $f_{i-k}$ denotes the pixel value of the frame portion in one of the frames of the sequence of $n$ frames, $\max_{k=1\ldots n} \{f_{i-k}\}$ denotes the maximum pixel value of the frame portion among the sequence of $n$ frames, $\min_{k=1\ldots n} \{f_{i-k}\}$ denotes the minimum pixel value of the frame portion among the sequence of $n$ frames, and $TH_t$ denotes the threshold.

That is, a temporal contrast mask $M_t$ is used for eliminating non-flashing frame portions (e.g. pixels) and keeping flashing (blinking) ones. For TLD, where the LED light sources are always monochromatic (e.g. red, green, or yellow), e.g., the V-channel may be used instead of a grayscale for determining the contrast and comparing it to the threshold $TH_t$.

The further temporal contrast mask filtered version of the doubly filtered version of the traffic scene as illustrated in Fig. 4c is illustrated in **Fig. 4d**. In Fig. 4d the non-static frame portions (e.g. pixels) exhibiting the predetermined color range and a minimum contrast are depicted in white, whereas the frame portions which are static and/or of wrong color and/or of a wrong contrast are depicted in black. That is, the frame portions of interest are depicted in white.

It is evident from Figs. 4c to 4d that most frame portions are static, have a wrong color or a wrong contrast, i.e., they are non-interesting frame portions since they cannot represent a flashing LED light source. Accordingly, theses frame portions may be omitted in filtering steps in order to save computing resources and to minimize processing time. For example, all frame portions (e.g. pixels) may initially be marked as true candidates for representing the LED light source. Then, one or more masks are sequentially calculated. The frame portions annotated as false in the previous mask (because they do not satisfy the respective filter criterion) are directly marked as false in the following calculation.

The exemplarily determined frame portions are then frequency analyzed in order to determine candidates for representing the LED light source. Therefore, a variation of the frame portion of interest is determined using the sequence of frames. Determining the variation of the frame portion of interest comprises comparing a characteristic value of the frame portion of interest in one of the sequence of frames to the respective characteristic values of the frame portion of interest in the other ones of the sequence of frames. The characteristic value of the frame portion may, e.g., be the pixel value of the frame portion. The characteristic value of the frame portion is a value representing a luminance or brightness of the frame portion. By comparing the characteristic value of the frame portion of interest in one frame of the sequence of frames to the respective characteristic values of the frame portion of interest in the other frames of the sequence of frames, a variation of the characteristic value within the sequence of frames may be determined. Hence, a variation of the frame portion of interest within the sequence of frames may be detected.

In some examples, comparing the characteristic value of the frame portion of interest in the one of the sequence of frames to the characteristic value of the frame portion of interest in one of the other ones of the sequence of frames indicates a first comparison result if the characteristic value of the frame portion of interest in the one of the sequence of frames is smaller than a first threshold value. The comparison indicates a second comparison result if the characteristic value of the frame portion of interest in the one of the sequence of frames is smaller than or equal to a second threshold value. Further, the comparison indicates a third comparison result if the characteristic value of the frame portion of interest in the one of the sequence of frames is greater than the second threshold value. In this respect, the first threshold value and the second threshold value are based on the characteristic value of the frame portion of interest in the one of the other ones of the sequence of frames.

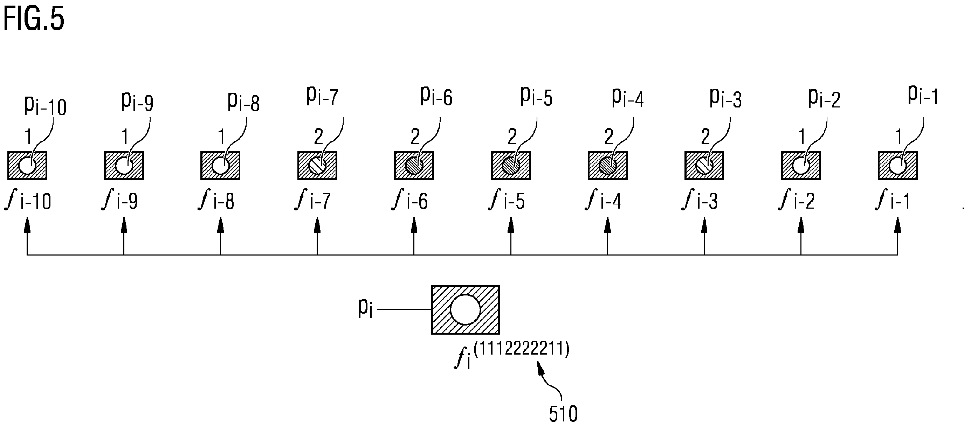

An example for such a comparison is given in **Fig. 5**. In Fig. 5, the characteristic value $p_i$ of the frame portion of interest in a frame fi of the sequence of frames is compared to the characteristic values $p_{i-1}$ to $p_{i-10}$ of the frame portion of interest in the ten temporally preceding frames fi-i to $f_{i-10}$. That is, the frames fi to $f_{i-10}$ form a sequence of frames.

On top of each of the frames fi-i to $f_{i-10}$ a figure denotes the comparison result. For example, above frame $f_{i-5}$ the figure "2" is illustrated since the characteristic value $p_i$ of the frame portion of interest in frame $f_i$ of the sequence of frames is greater than a second threshold value, wherein the second threshold value is based on the characteristic value $p_{i-5}$ of the frame portion of interest in the frame $f_{i-5}$. Above frame $f_{i-10}$ the figure "1" is illustrated since the characteristic value $p_i$ of the frame portion of interest in frame $f_i$ of the sequence of frames is smaller than or equal to a second threshold value, wherein the second threshold value is based on the characteristic value $p_{i-10}$ of the frame portion of interest in the frame $f_{i-10}$.

That is, the figure "1" indicates a second comparison result, whereas the figure "2" indicates a third comparison result. For none of the comparisons between the characteristic value pi of the frame portion of interest in frame $f_i$ and the characteristic values $p_{i-1}$ to $p_{i-10}$ of the frame portion of interest in the ten temporally preceding frames $f_{i-1}$ to $f_{i-10}$ a first comparison result is indicated.

That is, comparing the characteristic value of the frame portion of interest in the one of the sequence of frames to the characteristic value of the frame portion of interest in the one of the other ones of the sequence of frames is based on an expression which is mathematically correspondent to

$$T(i,j) = \begin{cases} 0 & if \quad i < j - t \\ 1 & if \quad |i - j| \le t \\ 2 & if \quad i > j + t \end{cases} \quad (3),$$

with $T(i,j)$ denoting the comparison result, $i$ denoting the characteristic value of the frame portion of interest in the one of the sequence of frames, $j$ denoting the characteristic value of the frame portion of interest in the one of the other ones of the sequence of frames, and $t$ denoting a constant. The expression $|i - j| \le t$ may be reformulated as $i \ge j - t$ and $i \le j + t$. Regarding equation (3), $j - t$ thus corresponds to a first threshold, whereas $j + t$ corresponds to a second threshold.

The proposed method further comprises combining the individual comparison results for the sequence of frames. Therefore, the method further comprises generating a pattern 510 from the respective comparison results of comparing the characteristic value of the frame portion of interest in the one of the sequence of frames to the respective characteristic values of the frame portion of interest in the other ones of the sequence of frames. The pattern 510 illustrated in Fig. 5 is in chronological order. That is, the leftmost figure of the pattern 510 results from the comparison of the characteristic values pi and $p_{i-10}$, the second figure from the left of the pattern 510 results from the comparison of the characteristic values pi and $p_{i-9}$, etc.

In other words, the frame portion of interest pi (e.g. a pixel) from current frame fi is sequentially compared with its counterparts in previous frames. The comparison results (represented by figures 0/1/2) are then concatenated together.

The pattern 510 may, hence, be named a temporal ternary pattern (TTP). Like a Local Binary Pattern (LBP), a TTP may compactly encode temporal information in a small window. It has a low complexity O(n), wherein n is the temporal window size, i.e., the number of frames preceding the one frame in the sequence of frames. For example, for a pixel pi in a frame fi and its temporal neighbors at the same position $\{p_{i-k}|k = 1, ..., n\}$, a TTP is extracted by performing ternary comparisons $T$ between pi and $p_{i-k}$, and concatenating them into a compact string.

The TTP has n figures for a sequence of frames comprising $n + 1$ frames:

$$TTP = \{T(p_i, p_{i-n}), T(p_i, p_{i-n+1}), ..., T(p_i, p_{i-1})\}$$

Each figure is defined by a pair-wise ternary comparison (see, e.g., equation (3)). The three characters depict situations where $i$ is significantly smaller than $j$ (figure "0"), equivalent to $j$ (figure "1"), and significantly greater than $j$ (figure "2"). In contrast to binary comparisons such as LBP, a constant $t$ is used for the ternary comparison. Accordingly, the comparison may be less affected by noise in the individual frames of the sequence of frames (e.g. due to camera noise).

The determined pattern represents the frequency of the variation of a frame portion of interest.

Hence, it is used for determining whether the frame portion of interest is a candidate for representing a LED light source. Hence, determining that the frame portion of interest is a candidate for representing the LED light source comprises comparing the pattern to at least one reference pattern, wherein the reference pattern indicates the presence of a LED light source.

The reference pattern represents a reference variation for the frame portion of interest whose frequency is within the predefined frequency range. If the determined pattern is equal to the reference pattern, the frame portion of interest is, hence, likely to represent a LED light source. Thus, if the determined pattern is equal to the reference pattern, the frame portion of interest is a suitable candidate for representing a LED light source.

For determining that the frame portion of interest is a candidate for representing a LED light source, a table with one or more reference patterns, each indicating the presence of an LED light source, may be provided. The reference patterns may, e.g., be obtained from training data sets.

Regarding Figs. 4a to 4d and Fig. 5, TTPs may be extracted for each portion of interest (e.g. a pixel) obtained from the pre-processing. Then, these TTPs may be efficiently filtered based on a predefined table with references. A TTP may be extracted not for each recorded frame but only for a peak frame in a period (e.g. 10 recorded frames). The peak frame may, e.g., be the brightest frame. The peak frame may then be compared with, e.g., its preceding 10 frames to form the TTP string as discussed above.

The processing discussed above may provide one or more candidates for representing a LED light source. In order to detect the full LED light source further post-processing may be done. For example, the frame portion of interest-wise results may be merged into BLOBs, i.e., the frame portion of interest-wise results are combined to regions of the frame in which one or more characteristics are constant or approximately constant. For example, if the frame portions of interest (i.e. the candidates for representing a LED light source) are single pixels of the frame, they may be merged to candidate regions. Moreover, the results after frequency analysis might contain some single, isolated false positive points. That is, single determined candidates for representing a LED light source may be false. For example, due to strong defocus blur and lighting condition changes, there might also be some missing pixels of the LED light source near the detected region.

The method may, hence, further comprise combining a subset of the second set of frame portions to a connected frame portion. For example, the frame portions of the second set of frame portions may be divided into BLOBs using 4-connected, 6-connected or 8-connected neighborhood. Further, the determined plurality of candidates for representing the LED light source is used for selecting true positives of the connected frame portions. Therefore, the method may comprise determining that the connected frame portion represents the LED light source, if the connected frame portion comprises a candidate for representing the LED light source. That is, merely a connected frame portion that comprises a candidate for representing the LED light source is determined to represent the LED light source.

In other words, the frequency analysis results may be used as a high-threshold-mask. It may be co-filtered with the color mask $M_c$ which serves as a low-threshold-mask. For example, all the positive pixels of the low-threshold mask may be divided into connected BLOBs using, e.g., 8-connected neighborhood. BLOBs containing at least one positive high-threshold pixel may be preserved, whereas the others are suppressed. Further simple features such as region aspect ratio or average luminance may be extracted to further reject false representatives of the LED light source.

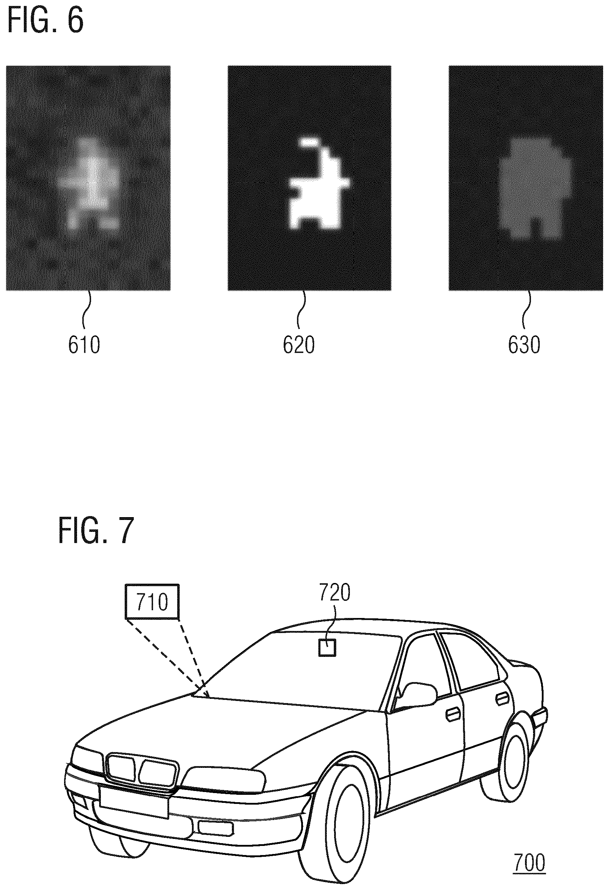

The effect of the post-processing is illustrated in **Fig. 6**. The left part 610 of Fig. 6 illustrates a frame input into the method. A blurred stylized walking figure of a traffic light with LED light sources is depicted. The result of the frequency analysis is illustrated in the middle part 620 of Fig. 6. That is, the white portions in the middle part 620 of Fig. 6 illustrate all determined candidates for representing the LED light source. It is evident from the middle part 620 of Fig. 6 that the candidates for representing the LED light source do not represent the complete walking figure depicted in the leftmost part of Fig. 6. In the right part 630 of Fig. 6, the result after post-processing is illustrated. That is, BLOBs are formed which comprise at least one candidate for representing the LED light source. It is evident from the right part 630 of Fig. 6 that the result after post-processing is visually more similar to the frame input into the method.

The proposed method was exemplarily discussed in the context of TLD. However, it is not restricted to this context. On the contrary, the proposed method may be used for detecting any kind of LED light source.

It is evident from the above discussion that the proposed method may allow LED light source detection, and hence also detection of traffic lights comprising LED light sources, with high accuracy. Hence, a method for detecting a traffic light which comprises at least one LED light source in a sequence of frames of an environment comprises the steps of the method to any of the claims 1 to 6.

Precision, recall and $F_1$ score of the proposed method may be higher compared to conventional approaches. Hence, the proposed method may allow improved TLD. Accordingly, a performance and accuracy of a driver-assistance system provided by a vehicle, or autonomous driving by a vehicle may be improved.

An example of an implementation using a method according to one or more aspects of the proposed concept or one or more examples described above is illustrated in **Fig. 7**. Fig. 7 illustrates a vehicle 700. The vehicle 700 is illustrated as an automobile. However, the vehicle 700 may be any apparatus that comprises an engine, a powertrain system and wheels. For example, the vehicle 700 may be a private vehicle or a commercial vehicle. In particular, the vehicle 700 may be an automobile, a truck, a motorcycle, or a tractor.

The vehicle 700 comprises a processing unit 710. The processing unit 710 may, e.g., comprise one or more processors or controller. The term "processor" or "controller" is, however, by far not limited to hardware exclusively capable of executing software, but may include digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

The processing unit 710 is configured to perform the method for detecting a LED light source according to any of the claims 1 to 6, or the method for detecting a traffic light according to claim 7.

By executing one of the above methods, a performance and accuracy of a driver-assistance system provided by the vehicle, or autonomous driving by the vehicle may be improved.

The vehicle 700 may further comprise a sensor 720 configured to generate the sequence of frames of the environment, which is input into the above discussed methods. That is, the sensor 720 may be sensitive to photons. For example, the sensor 720 may be a camera, in particular a high-speed camera. That is, the sensor may be configured to generate the sequence of frames of the environment with a frame rate of 100 FPS or more. The sensor 720 may be arranged within the vehicle 700 (i.e. the sensor 720 may be part of the vehicle's interior), or at the vehicle 700 (i.e. the sensor 720 is connected to the car from the outside). For example, the sensor 720 may be arranged at a windscreen of the vehicle 700, or at a front part of the vehicle 700.

The invention further relates to a computer program having a program code for performing one or more of the above methods, when the computer program is executed on a computing unit or processor. Steps, operations or processes of various above-described methods may be performed by programmed computers or processors. Examples may also cover program storage devices such as digital data storage media, which are machine, processor or computer readable and encode machine-executable, processor-executable or computer-executable programs of instructions. The instructions perform or cause performing some or all of the acts of the above-described methods. The program storage devices may comprise or be, for instance, digital memories, magnetic storage media such as magnetic disks and magnetic tapes, hard drives, or optically readable digital data storage media. Further examples may also cover computers, processors or control units programmed to perform the acts of the above-described methods or (field) programmable logic arrays ((F)PLAs) or (field) programmable gate arrays ((F)PGAs), programmed to perform the acts of the above-described methods. When provided by a processor, the functions may be provided by a single dedicated processor, by a single shared processor, or by a plurality of individual processors, some of which or all of which may be shared.

A block diagram may, for instance, illustrate a high-level circuit diagram implementing the principles of the disclosure. Similarly, a flow chart, a flow diagram, a state transition diagram, a pseudo code, and the like may represent various processes, operations or steps, which may, for instance, be substantially represented in machine readable medium and so executed by a computing unit or processor, whether or not such computing unit or processor is explicitly shown. Methods disclosed in the specification or in the claims may be implemented by a device having means for performing each of the respective acts of these methods.

It is to be understood that the disclosure of multiple acts, processes, operations, steps or functions disclosed in the specification or claims may not be construed as to be within the specific order, unless explicitly or implicitly stated otherwise, for instance for technical reasons. Therefore, the disclosure of multiple acts or functions will not limit these to a particular order unless such acts or functions are not interchangeable for technical reasons. Furthermore, in some examples a single act, function, process, operation or step may include or may be broken into multiple sub-acts, -functions, -processes, -operations or -steps, respectively. Such sub acts may be included and part of the disclosure of this single act unless explicitly excluded.

## Claims

1. A method (100) for detecting a LED light source in a sequence of frames of an environment, comprising:

   selecting (102) a frame portion of interest;
   determining (104), using the sequence of frames, a variation of the frame portion of interest,
   wherein determining (104) the variation of the frame portion of interest comprises comparing a characteristic value of the frame portion of interest in one frame of the sequence of frames to the respective characteristic values of the frame portion of interest in temporally preceding frames of the sequence of frames, wherein the result of each comparison is represented by characters 0, 1 or 2 according to the expression

$$T(i,j) = \begin{cases} 0 & if \ i < j - t \\ 1 & if \ |i - j| \le t \\ 2 & if \ i > j + t \end{cases},$$

   with $T(i,j)$ denoting a respective comparison result, $i$ denoting the characteristic value of the frame portion of interest in the one frame of the sequence of frames, $j$ denoting the characteristic value of the frame portion of interest in a respective one frame of the temporally preceding frames of the sequence of frames, and $t$ denoting a constant;
   generating a pattern from the respective comparison results of comparing the characteristic value of the frame portion of interest in the one frame of the sequence of frames to the respective characteristic values of the frame portion of interest in the temporally preceding frames of the sequence of frames, wherein the pattern is generated by concatenating together the respective comparison results into a string such that the leftmost character of the pattern results from the comparison of the characteristic value of the frame portion of interest in the one frame, $p_i$, of the sequence of frames with the characteristic value of the frame portion of interest in the temporally preceding frame $p_{i\_n}$, the second character from the left of the pattern results from the comparison of the characteristic values $p_i$ and $p_{i\_(n\_1)}$ and so on, wherein $n + 1$ is the number of frames in the sequence of frames; comparing the pattern to a reference pattern, wherein the reference pattern indicates the presence of an LED light source; and

determining (106) that the frame portion of interest is a candidate for representing the LED light source, if the pattern is equal to the reference pattern,

wherein a frame rate of the sequence of frames is 100 frames per second or more,

wherein the sequence of frames comprises at least 5 frames, and

wherein the characteristic value represents a luminance or brightness of the frame portion.

2. The method of claim 1, wherein the frame portion of interest is a pixel, and wherein the characteristic value of the frame portion of interest is a pixel value of the pixel.

3. The method of claim 1, wherein selecting (102) the frame portion of interest comprises repeatedly filtering at least part of the sequence of frames using a plurality of filter criteria.

4. The method of claim 3, wherein repeatedly filtering at least part of the sequence of frames using a plurality of filter criteria comprises determining a first set of frame portions, wherein each frame portion in the first set of frame portions satisfies the expression

$$\sum_{k=1}^{n+1}|f_{i-k} - f_i| > TH_m,$$

with $f_i$ denoting the pixel value of the respective frame portion in one frame of the sequence of frames, $f_{i-k}$ denoting the pixel value of the respective frame portion in one of the other frames of the sequence of frames and $TH_m$ denoting a threshold.

5. The method of claim 4, wherein repeatedly filtering at least part of the sequence of frames using a plurality of filter criteria further comprises determining a second set of frame portions from the first set of frame portions, wherein the frame portions in the second set of frame portions exhibit a predetermined color range.

6. The method of claim 5, wherein repeatedly filtering the sequence of frames using a plurality of filter criteria further comprises selecting a frame portion of the second set of frame portions as the frame portion of interest that satisfies the expression

$$\max_{k=1...n+1}\{f_{i-k}\} - \min_{k=1...n+1}\{f_{i-k}\} > TH_t,$$

with $TH_t$ denoting another threshold.

7. A method for detecting a traffic light which comprises at least one LED light source in a sequence of frames of an environment, wherein the method comprises the method according to any of claims 1 to 6.

8. A vehicle (700) comprising a processing unit (710) configured to perform the method for detecting a LED light source of any of claims 1 to 6, , or the method for detecting a traffic light of claim 7.

9. The vehicle of claim 8, further comprising a sensor (720) configured to generate the sequence of frames of the environment.

10. A machine readable storage medium having stored thereon a program having a program code for performing the method for detecting a LED light source of any of claims 1 to 6 or the method for detecting a traffic light of claim 7, when the program is executed on a computing unit or a processor.

**Patentansprüche**

1. Verfahren (100) zum Detektieren einer LED-Lichtquelle in einer Rahmenfolge einer Umgebung, das Folgendes umfasst:

Auswählen (102) eines Rahmenabschnitts von Interesse;

Bestimmen (104) einer Veränderung des Rahmenabschnitts von Interesse unter Verwendung der Rahmenfolge, wobei das Bestimmen (104) der Veränderung des Rahmenabschnitts von Interesse das Vergleichen eines Eigenschaftswertes des Rahmenabschnitts von Interesse in einem Rahmen der Rahmenfolge mit den jeweiligen Eigenschaftswerten des Rahmenabschnitts von Interesse in zeitlich vorhergehenden Rahmen der Rahmenfolge umfasst, wobei das Ergebnis jedes Vergleichs durch die Zeichen 0, 1 oder 2 gemäß dem folgenden Ausdruck dargestellt wird:

$$T(i,j) = \begin{cases} 0, \text{falls } i < j - t \\ 1, \text{falls } |i - j| \leq t \\ 2, \text{falls } i > j + t \end{cases},$$

wobei $T(i,j)$ ein jeweiliges Vergleichsergebnis bezeichnet, $i$ den Eigenschaftswert des Rahmenabschnitts von Interesse in dem einen Rahmen der Rahmenfolge bezeichnet, $j$ den Eigenschaftswert des Rahmenabschnitts von Interesse in einem jeweiligen Rahmen der zeitlich vorhergehenden Rahmen der Rahmenfolge bezeichnet und $t$ eine Konstante bezeichnet;

Erzeugen eines Musters aus den jeweiligen Vergleichsergebnissen des Vergleichens des Eigenschaftswertes des Rahmenabschnitts von Interesse in dem einen Rahmen der Rahmenfolge mit den jeweiligen Eigenschaftswerten des Rahmenabschnitts von Interesse in den zeitlich vorhergehenden Rahmen der Rahmenfolge, wobei das Muster durch Verketten der jeweiligen Vergleichsergebnisse miteinander zu einer Zeichenkette erzeugt wird, derart, dass das am weitesten links angeordnete Zeichen des Musters aus dem Vergleich des Eigenschaftswertes des Rahmenabschnitts von Interesse in dem einen Rahmen $p_i$ der Rahmenfolge mit dem Eigenschaftswert des Rahmenabschnitts von Interesse in dem zeitlich vorhergehenden Rahmen $p_{i-n}$ resultiert, das zweite Zeichen von links des Musters aus dem Vergleich der Eigenschaftswerte $p_i$ und $p_{i-(n-1)}$ resultiert, und so weiter, wobei $n + 1$ die Anzahl der Rahmen in der Rahmenfolge ist;

Vergleichen des Musters mit einem Referenzmuster, wobei das Referenzmuster das Vorhandensein einer LED-Lichtquelle angibt; und

Bestimmen (106), dass der Rahmenabschnitt von Interesse ein Kandidat für das Darstellen der LED-Lichtquelle ist, wenn das Muster gleich dem Referenzmuster ist,

wobei eine Rahmenrate der Rahmenfolge 100 Rahmen pro Sekunde oder mehr ist,

wobei die Rahmenfolge mindestens 5 Rahmen umfasst, und

wobei der Eigenschaftswert eine Leuchtdichte oder Helligkeit des Rahmenabschnitts darstellt.

2. Verfahren nach Anspruch 1, wobei der Rahmenabschnitt von Interesse ein Pixel ist und wobei der Eigenschaftswert des Rahmenabschnitts von Interesse ein Pixelwert des Pixels ist.

3. Verfahren nach Anspruch 1, wobei das Auswählen (102) des Rahmenabschnitts von Interesse das wiederholte Filtern zumindest eines Abschnitts der Rahmenfolge unter Verwendung mehrerer Filterkriterien umfasst.

4. Verfahren nach Anspruch 3, wobei das wiederholte Filtern zumindest eines Abschnitts der Rahmenfolge unter Verwendung mehrerer Filterkriterien das Bestimmen einer ersten Gruppe von Rahmenabschnitten umfasst, wobei jeder Rahmenabschnitt in der ersten Gruppe von Rahmenabschnitten den folgenden Ausdruck erfüllt,

$$\sum_{k=1}^{n+1} |f_{i-k} - f_i| > TH_m,$$

wobei $f_i$ den Pixelwert des jeweiligen Rahmenabschnitts in einem Rahmen der Rahmenfolge bezeichnet, $f_{i-k}$ den Pixelwert des jeweiligen Rahmenabschnitts in einem der anderen Rahmen der Rahmenfolge bezeichnet und $TH_m$ einen Schwellenwert bezeichnet.

5. Verfahren nach Anspruch 4, wobei das wiederholte Filtern zumindest eines Abschnitts der Rahmenfolge unter Verwendung mehrerer Filterkriterien ferner das Bestimmen einer zweiten Gruppe von Rahmenabschnitten aus der ersten Gruppe von Rahmenabschnitten umfasst, wobei die Rahmenabschnitte in der zweiten Gruppe von Rahmenabschnitten einen vorgegebenen Farbbereich aufweisen.

**6.** Verfahren nach Anspruch 5, wobei das wiederholte Filtern der Rahmenfolge unter Verwendung mehrerer Filterkriterien ferner das Auswählen eines Rahmenabschnitts der zweiten Gruppe von Rahmenabschnitten als den Rahmenabschnitt von Interesse, der den folgenden Ausdruck erfüllt, umfasst,

$$\max_{k=1\ldots n+1} \{f_{i-k}\} - \min_{k=1\ldots n+1} \{f_{i-k}\} > TH_t,$$

wobei $TH_t$ einen weiteren Schwellenwert bezeichnet.

**7.** Verfahren zum Detektieren einer Lichtsignalanlage, die mindestens eine LED-Lichtquelle umfasst, in einer Rahmenfolge einer Umgebung, wobei das Verfahren das Verfahren nach einem der Ansprüche 1 bis 6 umfasst.

**8.** Fahrzeug (700), das eine Verarbeitungseinheit (710) umfasst, die konfiguriert ist, das Verfahren zum Detektieren einer LED-Lichtquelle nach einem der Ansprüche 1 bis 6 oder das Verfahren zum Detektieren einer Lichtsignalanlage nach Anspruch 7 auszuführen.

**9.** Fahrzeug nach Anspruch 8, das ferner einen Sensor (720) umfasst, der konfiguriert ist, die Rahmenfolge der Umgebung zu erzeugen.

**10.** Maschinenlesbares Speichermedium, auf dem ein Programm gespeichert ist, das einen Programmcode zum Durchführen des Verfahrens zum Detektieren einer LED-Lichtquelle nach einem der Ansprüche 1 bis 6 oder des Verfahrens zum Detektieren einer Lichtsignalanlage nach Anspruch 7, wenn das Programm auf einer Recheneinheit oder einem Prozessor ausgeführt wird, aufweist.

**Revendications**

**1.** Procédé (100) permettant de détecter une source de lumière LED dans une séquence de trames d'un environnement, comprenant :

la sélection (102) d'une partie d'intérêt de trame ;
la détermination (104), en utilisant la séquence de trames, d'une variation de la partie d'intérêt de trame, dans lequel la détermination (104) de la variation de la partie d'intérêt de trame consiste à comparer une valeur caractéristique de la partie d'intérêt de trame dans une trame de la séquence de trames aux valeurs caractéristiques respectives de la partie d'intérêt de trame dans des trames précédentes temporellement de la séquence de trames, le résultat de chaque comparaison étant représenté par les caractères 0, 1 ou 2 selon l'expression :

$$T(i,j) = \begin{cases} 0 & if \ i < j - t \\ 1 & if \ |i - j| \le t \\ 2 & if \ i > j + t \end{cases},$$

avec T($i$, $j$) indiquant un résultat de comparaison respectif, $i$ indiquant la valeur caractéristique de la partie d'intérêt de trame dans la trame de la séquence de trames, $j$ indiquant la valeur caractéristique de la partie d'intérêt de trame dans une trame respective des trames précédentes temporellement de la séquence de trames, et $t$ indiquant une constante ;
la génération d'un motif à partir des résultats de comparaison respectifs de comparaison de la valeur caractéristique de la partie d'intérêt de trame dans la trame de la séquence de trames aux valeurs caractéristiques respectives de la partie d'intérêt de trame dans les trames précédentes temporellement de la séquence de trames, dans lequel le motif est généré en concaténant ensemble les résultats de comparaison respectifs dans une chaîne de sorte que le caractère le plus à gauche des résultats de motif venant de la comparaison de la valeur caractéristique de la partie d'intérêt de trame dans la trame, $p_i$, de la séquence de trames à la valeur caractéristique de la partie d'intérêt de trame dans la trame précédente temporellement $p_{i-n}$, le second caractère à partir de la gauche des résultats de motif venant de la comparaison des valeurs caractéristiques $p_i$ et $p_{i-(n-1)}$ et ainsi de suite, dans lequel n+1 est le nombre de trames dans la séquence de trames ;
la comparaison du motif à un motif de référence, dans lequel le motif de référence indique la présence d'une

14

source de lumière LED ; et

la détermination (106) que la partie d'intérêt de trame est une candidate pour représenter la source de lumière LED, si le motif est égal au motif de référence,

dans lequel un débit de trame de la séquence de trames est de 100 trames par seconde ou plus,

dans lequel la séquence de trames comprend au moins 5 trames, et

dans lequel la valeur caractéristique représente une luminance ou une luminosité de la partie de trame.

2. Procédé selon la revendication 1, dans lequel la partie d'intérêt de trame est un pixel, et dans lequel la valeur caractéristique de la partie d'intérêt de trame est une valeur de pixel du pixel.

3. Procédé selon la revendication 1, dans lequel la sélection (102) de la partie d'intérêt de trame consiste à filtrer de manière répétée au moins une partie de la séquence de trames en utilisant une pluralité de critères de filtres.

4. Procédé selon la revendication 3, dans lequel filtrer de manière répétée au moins une partie de la séquence de trames en utilisant une pluralité de critères de filtres consiste à déterminer un premier ensemble de parties de trame, chaque partie de trame dans le premier ensemble de parties de trame satisfaisant l'expression :

$$\sum_{k=1}^{n+1} |f_{i-k} - f_i| > TH_m,$$

avec $f_i$ indiquant la valeur de pixel de la partie de trame respective dans une trame de la séquence de trames, $f_{i-k}$ indiquant la valeur de pixel de la partie de trame respective dans une des autres trames de la séquence de trames et $TH_m$ indiquant un seuil.

5. Procédé selon la revendication 4, dans lequel filtrer de manière répétée au moins une partie de la séquence de trames en utilisant une pluralité de critères de filtres consiste en outre à déterminer un second ensemble de parties de trames à partir du premier ensemble de parties de trames, dans lequel les parties de trames dans le second ensemble de parties de trames affichent une plage de couleur prédéterminée.

6. Procédé selon la revendication 5, dans lequel filtrer de manière répétée la séquence de trames en utilisant une pluralité de critères de filtres consiste en outre à sélectionner une partie de trame du second ensemble de parties de trames en tant que la partie d'intérêt de trame qui satisfait l'expression :

$$\max_{k=1...n+1} \{f_{i-k}\} - \min_{k=1...n+1} \{f_{i-k}\} > TH_t,$$

avec $TH_t$ indiquant un autre seuil.

7. Procédé de détection d'une lumière de trafic qui comprend au moins une source de lumière LED dans une séquence de trames d'un environnement, dans lequel le procédé comprend le procédé selon l'une quelconque des revendications 1 à 6.

8. Véhicule (700) comprenant une unité de traitement (710) configurée pour mettre en œuvre le procédé permettant de détecter une source de lumière LED selon l'une quelconque des revendications 1 à 6, ou le procédé permettant de détecter une lumière de trafic selon la revendication 7.

9. Véhicule selon la revendication 8, comprenant en outre un capteur (720) configuré pour générer la séquence de trames de l'environnement.

10. Support de stockage lisible par machine sur lequel est stocké un programme ayant un code de programme pour mettre en œuvre le procédé permettant de détecter une source de lumière LED selon l'une quelconque des revendications 1 à 6, le procédé permettant de détecter une lumière de trafic selon la revendication 7, lorsque le programme est exécuté sur une unité informatique ou un processeur.

# FIG. 1

```
┌─────────────────────────────────────┐
│   selecting a frame portion of interest   │───102
└─────────────────────────────────────┘
                    │
┌─────────────────────────────────────┐
│   determining a variation of the frame   │───104    100
│          portion of interest             │
└─────────────────────────────────────┘
                    │
┌─────────────────────────────────────┐
│   determining that the frame portion of  │
│ interest is a candidate for representing  │───106
│          the LED light source            │
└─────────────────────────────────────┘
```

# FIG. 2

# FIG. 3a

# FIG. 3b

FIG. 4a

FIG. 4b

FIG. 4c

FIG. 4d

FIG.5

$p_{i-10}$  $p_{i-9}$  $p_{i-8}$  $p_{i-7}$  $p_{i-6}$  $p_{i-5}$  $p_{i-4}$  $p_{i-3}$  $p_{i-2}$  $p_{i-1}$

$f_{i-10}$  $f_{i-9}$  $f_{i-8}$  $f_{i-7}$  $f_{i-6}$  $f_{i-5}$  $f_{i-4}$  $f_{i-3}$  $f_{i-2}$  $f_{i-1}$

$p_i$

$f_i^{(1112222211)}$

510

FIG. 6

610                    620                    630

FIG. 7

710          720

700

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2015136601 A1

### Non-patent literature cited in the description

- **M. JENSEN et al.** Vision for Looking at Traffic Lights: Issues, Survey, and Perspectives. *IEEE Transactions on Intelligent Transportation Systems,* vol. 17 (7

- **H. PREMACHANDRA et al.** LED Traffic Light Detection Using High-speed camera Image Processing for Visible Light Communication. *Information and Media Technologies,* January 2011, vol. 6 (3), 785-791